# EUROPEAN PATENT SPECIFICATION

(11) **EP 0 497 749 B1**
(45) Date of publication and mention of the grant of the patent: **21.09.1994**
(21) Application number: 92850015.6
(22) Date of filing: 27.01.1992
(51) Int. Cl.: B09B 3/00, B09B 5/00, A62D 3/00

(54) **A method of successively decreasing the mercury concentration in controlled waste depositions**
Verfahren zur sukzessiven Verringerung der Konzentration des Quecksilbers in kontrollierten Abfalldeponien
Procédé pour la réduction successive de la concentration du mercure en dépôts de déchets contrôlés

(30) Priority: 28.01.1991 SE 9100239
(43) Date of publication of application: 05.08.1992
(73) Proprietor: BOLIDEN CONTECH AB, S-100 31 Stockholm (SE)
(72) Inventor: Hartzell, Nils Göran N:son, S-430 84 Styrsö (SE); Ludvigsson, Björn Martin, S-932 34 Örviken (SE)
(74) Representative: Lundin, Björn-Eric

(56) References cited:
- EP-A- 0 157 249
- EP-A- 0 304 712
- DE-C- 3 911 395
- US-A- 3 786 619

## Description

The present invention relates to a method of successively decreasing the mercury concentration of a fully or partially sealed tip or deposition intended for the controlled tipping of mercury contaminated materials while simultaneously preventing uncontrolled emission of mercury to atmosphere from the tip.

The problems associated with the handling of environmentally harmful wastes are well known. Mercury contaminated materials occupy a high position on the list of environmentally harmful waste materials, due to the high toxicity of mercury and because of its ability to convert to vapour form, even at low temperatures. Because of the high toxicity of mercury, greater attention is being paid to the problems that result from this specific property of mercury. This is not least because mercury is present in a large number of products and is used in a large number of manufacturing processes.

Hitherto, mercury-containing waste has either been destroyed by incineration, so-called thermal destruction, or has been deposited in controlled tips. Hone of these methods, however, will totally eliminate the problem of the emission of mercury to atmosphere. In the majority of cases, thermal destruction leaves residual products which contain varying amounts of mercury and which must be further dealt with, for instance deposited in a controlled tip. Consequently, the incineration of mercury-contaminated waste can be considered primarily as a first handling stage, in which the volume of the waste concerned is reduced to a size which can be more readily handled for controlled tipping purposes.

Controlled tipping can be divided into three categories: Final deposition, process deposition and deposition for the recovery of valuable materials. All controlled tipping categories, however, are encumbered with problems concerning reliability in operation, sealing of the tip against emission to atmosphere and repairability. According to present-day techniques, mercury-contaminated waste deposit tips are sealed with the aid of several sealing layers of mutually different materials, for instance a combination of concrete, filler, sand, geofabric, geomembranes of different types against the ground, and a combination of macadam, sand, geofabric and highly-elastic geomembranes against the atmosphere. The method is both complicated and expensive. Neither is it able to exclude the risk of diffusion of mercury through the sealing layers, and this problem can be exacerbated by mechanical damage to the sealing layers, by leakage or by temperature influences. A mercury tip also represents a "mercury bomb" which can be triggered off at any time whatsoever. Consequently, the permanent deposition of mercury-contaminated waste must be avoided as far as possible. Neither is it possible at present to process the deposited waste with the object of recovering any valuable materials that it may contain.

The mercury-contaminated waste includes large quantities of other waste materials. For example, a large part of the waste consists of demolition material removed from demolished chloralkali plants, i.e. the debris or rubbish includes both concrete, brick and iron scrap. The waste will also include mining waste, industrial waste, residues taken from domestic garbage incinerators, and also residues from the destruction of fluorescent tubes, low-energy lamps, batteries, etc.

It has now surprisingly been found, in accordance with the present invention, that the problems mentioned in the aforegoing can be easily eliminated and that the waste can also be processed at a later stage for the purpose of recovering valuable substances contained by the waste, by means of the inventive method for the controlled tipping of mercury-contaminated material. The inventive method is characterized by the steps set forth in the following Claims.

The invention is based on the steps of passing a controlled quantity of supply air into the tip so as to purge the tip of its mercury vapour content, and of passing the whole of the purging air flow exiting from the tip through a filter which is capable of effectively removing the mercury vapour from the contaminated air flow.

Purging or ventilation of the tip can be facilitated with the aid of a fan, even though it is often sufficient to effect ventilation by natural ventilation means, for instance by using a chimney.

Purging of the tip may be further facilitated with the aid of at least one air supply conduit which leads from the ambient atmosphere to the interior of the tip.

The tip is preferably sealed against the atmosphere by means of several essentially gas-impervious membranes, and purging ventilation of the tip is effected through a pipe mounted at least on the uppermost membrane.

A filter which can be used advantageously to remove purged mercury from the exhaust air is a selenium filter of the kind described in US-A-3,786,619, this filter containing a cleaning material whose active component includes selenium, selenium sulphide or other selenium compounds or mixtures thereof. The active components may be applied to an inert carrier of silica, aluminium oxide, iron oxide, a ceramic material or mixtures thereof.

It is also possible to use a carbon filter, for instance a filter of the kind described in DE-B-21 50 592. This filter contains active carbon which has been impregnated with sulphur or sulphur compounds by treating the carbon with SO₂ or H₂S or by successive treatment with H₂S and SO₂ or SO₂ and H₂S, to form solid sulphur or solid sulphur compounds.

In order to enable the decreasing mercury content of the tip to be controlled continuously, the filter is suitably arranged so as to enable its mercury take-up to be monitored. This enables the filter to be exchanged when necessary and also enables the tip controlling process to be abandoned when so desired when substantially all of the mercury earlier contained in the tip has been purged therefrom and taken-up by the filter. This enables the tip to be worked for the purpose of recovering its valuable material content, without risking further mercury emission to atmosphere.

It is particularly preferred to use the air that exits from the tip after being cleaned in the filter as the tip supply air. This provides two advantages. Firstly, the energy content of the exhaust air can be recovered by recycling either all or part of the exhaust air in an energy recovering circuit, and when the recycling circuit is fully closed prevents any form of emission to atmosphere, for example in the event of the filter becoming saturated or in the event of a breakdown.

The departure of mercury from the tip can be accelerated by delivering heat to the tip, such as to maintain a temperature higher than ambient temperature at least during part of the tip control period.

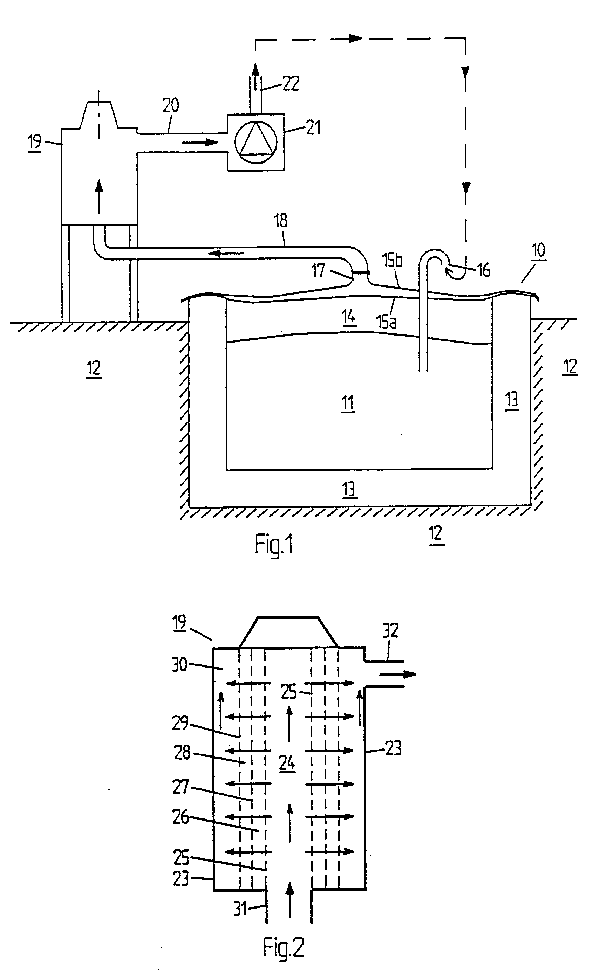

The invention will now be described in more detail with reference to an exemplifying embodiment thereof and with reference to the accompanying drawing, in which Figure 1 is a schematic illustration of a controlled tip in which the inventive method is applied; and Figure 2 illustrates, partially in section, the selenium filter used in the embodiment according to Figure 1.

Figure 1 identifies a controlled tip or waste deposit facility 10 which includes a space 11 for mercury-contaminated waste materials. The space 11 is sealed against the ground 12 by means of several impervious and ground-sealing layers, which are identified by the general reference 13. These layers comprise concrete, fillers, sand, draining mats, geofabrics and geomembranes. Towards atmosphere, the content of the space 11 is first levelled-off with several layers 14 comprised of macadam and sand, and is then sealed with several sealing layers 15a,b consisting of nonwoven fabrics and rubber membranes. Mounted in the outermost layer 15b is a pipe 17 to which there is connected a conduit 18, in the form of a hose or a pipe which communicates with a cylindrical filter plant 19, which in turn communicates with a fan means 21 through a further conduit 20, and a third conduit 22 connects the fan means 21 to atmosphere. Supply air intended for ventilating the tip is introduced through a supply air conduit 16 which communicates with the space 11 in the tip 10. Alternatively, as indicated above, the conduit 22 can be connected to the supply air conduit 16 instead of communicating with atmosphere, thereby creating a closed circuit in which supply air can be recycled in the system.

Figure 2 is a more detailed view of the cylindrical filter 19. When seen in cross-section, the filter 19 has a circular outer wall 23. Provided within the filter 19 is a cylindrical space 24 which is defined by a gas-permeable partition wall 25, and externally of this wall there is provided a second space 26 which is defined outwardly by a second partition wall 27. Provided outside the partition wall 27 is a third space 28, which is defined outwardly by a third partition wall 29. The outer wall 23 and the partition wall 29 define a fourth space 30 therebetween. The filter 19 also includes a connector 31 for the supply of gas (air) from an outer conduit (reference 18 in Figure 1) and a further connector 32 for the departure of exhaust gas (air), this further connector being connected to the conduit 20 in the Figure 1 illustration. The inner space 24 is empty, whereas the space 26 defined outwardly of this space by the partition walls 25, 27 is filled with material which functions to take up particles suspended in the gas to be treated. The space 28 defined by the partition walls 27, 29 is filled with a selenium-coated substrate material for taking up mercury, whereas the space 30 which lies outwardly of the space 28 is empty. Thus, the gas to be cleaned passes through the space 26 for particle extraction and then through the space 28 for mercury extraction before passing through the space 30 and to the connector 32 and further in the system in the direction indicated by the horizontal arrow pointing to the right in Figure 2. Mercury is taken-up by the selenium layer on the carrier material in the space 28 to form a mercury selenide according to the formula:

Hg + Se ----> HgSe

Mercury selenide is a highly stable compound of extremely low solubility and low vapour pressure at the prevailing temperatures. The high vapour pressure of mercury at low temperatures is utilized when practicing the inventive method in the controlled tipping of mercury contaminated waste. If no air was supplied to the space 11 through the conduit 16, the mercury vapour deriving from the mercury content of the materials deposited in the space 11 would diffuse uniformly throughout the whole of the space 11 when saturation is reached at the temperatures in question, due to the mercury equilibrium vapour pressure over the mercury present in the materials deposited. By drawing supply air into the space 11 through the conduit 16 in accordance with the invention, so as to ventilate the space, the air present in the upper part of the space 11 is flushed away by the supply air and is passed through the conduit 18 to the selenium filter 19, where the mercury present in the air flow is taken-up to form stable HgSe at an efficiency of up to slightly more than 99%. Because the upper part of the space 11 is thus depleted of mercury continuously, mercury will diffuse constantly towards this part of the space from the remaining parts of the space 11. The mercury content of the deposited materials will therefore decrease successively and when the total amount of mercury initially contained by these materials and the amount of mercury taken-up in the selenium filter 19 are known, it is possible to determine a time at which the tip controlling period can be brought to an end. Thus, when the deposited materials have an acceptable low mercury content, tip control can be ended and the materials used in a desired manner and optionally processed.

The invention thus affords a number of important advantages. Firstly, tip control can be effected more safely from an environmental aspect during the tip control period, secondly the concentration of mercury in the materials deposited at the tip can be reduced successively during this period of tip control, and thirdly the tip control period can be terminated, therewith avoiding "eternal tip" situations with the subsequent higher risk of mercury emission to the surrounds.

## Claims

1. A method of successively decreasing the mercury concentration in controlled waste tips that contain mercury-contaminated materials and, at the same time, of preventing the uncontrolled release of mercury from a totally or partially sealed tip, **characterized** by introducing into the material in said tip a controlled quantity of a purging gas such as to ventilate said tip, collecting the contaminated gas leaving the tip and passing it through a filter which is capable of effectively taking-up mercury.

2. A method according to Claim 1, **characterized** by backing-up the purging ventilation process with a fan.

3. A method according to Claim 1 or 2, **characterized** by facilitating the purging ventilation of the tip with the aid of at least one supply air conduit that leads from atmosphere to the interior.

4. A method according to any one of Claims 1-3, **characterized** by sealing the tip against the surrounding atmosphere with the aid of several essentially gas-impervious membranes; and by effecting said purging ventilation through a pipe arranged in the uppermost membrane.

5. A method according to any one of Claims 1-4, **characterized** by using a selenium filter for the take-up of mercury.

6. A method according to any one of Claims 1-4, **characterized** by using a carbon filter for the take-up of mercury.

7. A method according to any one of Claims 1-6, **characterized** by monitoring the amount of mercury taken-up by the filter.

8. A method according to Claim 7, **characterized** by terminating the tip control process when essentially all of the mercury earlier contained by the tip has been purged-off by ventilation and taken-up by said filter, whereafter the deposited material can be processed with the intention of recovering valuable constituents thereof.

9. A method according to any one of Claims 1-8, **characterized** by using filter exhaust air as tip supply air.

10. A method according to any one of the preceding Claims, **characterized** by maintaining the tip at an elevated temperature, at least during part of the tip control period.

## Patentansprüche

1. Verfahren zur sukzessiven Verringerung der Quecksilberkonzentration in kontrollierten Abfalldeponien, die mit Quecksilber verunreinigte Materialien enthalten, und zur gleichzeitigen Verhinderung unkontrollierter Abgabe von Quecksilber aus einer insgesamt oder teilweise abgedichteten Deponie, **dadurch gekennzeichnet**, daß man in das Material in der Deponie eine gesteuerte Menge eines Spülgases einführt und so diese Deponie durchlüftet, das die Deponie verlassende verunreinigte Gas sammelt und es durch einen Filter führt, welcher Quecksilber wirksam aufnehmen kann.

2. Verfahren nach Anspruch 1, **dadurch gekennzeichnet**, daß man die spülende Durchlüftung mit einem Ventilator unterstützt.

3. Verfahren nach Anspruch 1 oder 2, **dadurch gekennzeichnet**, daß man die spülende Durchlüftung der Deponie mit Hilfe wenigstens einer Zufuhrluftleitung erleichtert, die von der Atmosphäre zu dem Inneren führt.

4. Verfahren nach einem der Ansprüche 1 bis 3, **dadurch gekennzeichnet**, daß man die Deponie gegen die umgebende Atmosphäre mit Hilfe mehrerer im wesentlichen gasundurchlässiger Membranen abdichtet und die spülende Durchlüftung über eine Rohrleitung bewirkt, die in der obersten Membran angeordnet ist.

5. Verfahren nach einem der Ansprüche 1 bis 4, **dadurch gekennzeichnet**, daß man für die Quecksilberaufnahme einen Selenfilter verwendet.

6. Verfahren nach einem der Ansprüche 1 bis 4, **dadurch gekennzeichnet**, daß man für die Quecksilberaufnahme einen Kohlenstoffilter verwendet.

7. Verfahren nach einem der Ansprüche 1 bis 6, **dadurch gekennzeichnet**, daß man die von dem Filter aufgenommene Quecksilbermenge überwacht.

8. Verfahren nach Anspruch 7, **dadurch gekennzeichnet**, daß man die Deponiekontrolle beendet, wenn im wesentlichen das gesamte früher in der Deponie enthaltene Quecksilber durch Durchlüftung ausgespült und von dem Filter aufgenommen wurde, wonach das deponierte Material zur Gewinnung von wertvollen Bestandteilen desselben verarbeitet werden kann.

9. Verfahren nach einem der Ansprüche 1 bis 8, **dadurch gekennzeichnet**, daß man als Deponiezufuhrluft Filterabluft verwendet.

10. Verfahren nach einem der vorausgehenden Ansprüche, **dadurch gekennzeichnet**, daß man die Deponie wenigstens während eines Teils der Deponiekontrollperiode auf einer erhöhten Temperatur hält.

## Revendications

1. Procédé d'abaissement successif de la concentration en mercure dans des décharges de déchets contrôlées qui contiennent des matières contaminées au mercure et, en même temps, d'empêchement de la libération non contrôlée de mercure d'une décharge totalement ou partiellement isolée, caractérisé par l'introduction dans la matière dans la décharge d'une quantité contrôlée d'un gaz de purge de manière à ventiler ladite décharge, par la collecte du gaz contaminé quittant la décharge et par le passage de celui-ci dans un filtre qui est capable d'absorber efficacement le mercure.

2. Procédé suivant la revendication 1, caractérisé par le soutien du processus de ventilation de purge au moyen d'un ventilateur.

3. Procédé suivant l'une ou l'autre des revendications 1 et 2, caractérisé en ce que la ventilation de purge de la décharge est facilitée à l'aide d'au moins un conduit d'air d'alimentation qui communique de l'atmosphère à l'intérieur.

4. Procédé suivant l'une quelconque des revendications 1 à 3, caractérisé par l'isolement de la décharge vis-à-vis de l'atmosphère ambiante à l'aide de plusieurs membranes essentiellement imperméables aux gaz et en ce que la ventilation de purge est effectuée par un conduit agencé dans la membrane supérieure.

5. Procédé suivant l'une quelconque des revendications 1 à 4, caractérisé par l'utilisation d'un filtre à sélénium pour l'absorption du mercure.

6. Procédé suivant l'une quelconque des revendications 1 à 4, caractérisé par l'utilisation d'un filtre à charbon pour l'absorption du mercure.

7. Procédé suivant l'une quelconque des revendications 1 à 6, caractérisé par un contrôle de la quantité du mercure absorbé par le filtre.

8. Procédé suivant la revendication 7, caractérisé en ce qu'on arrête le processus de contrôle de la décharge lorsque essentiellement la totalité du mercure contenu précédemment par la décharge a été purgée par ventilation et absorbée par le filtre susdit, après quoi la matière déposée peut être traitée dans le but de récupérer ses constituants intéressants.

9. Procédé suivant l'une quelconque des revendications 1 à 8, caractérisé en ce que l'on utilise l'air sortant du filtre comme air d'alimentation de la décharge.

10. Procédé suivant l'une quelconque des revendications précédentes, caractérisé en ce que l'on maintient la décharge à une température élevée, au moins pendant une partie de la période de contrôle de la décharge.
